# NEUE EUROPÄISCHE PATENTSCHRIFT

(11) **EP 1 446 997 B2**
(45) Veröffentlichungstag und Bekanntmachung des Hinweises auf die Entscheidung über den Einspruch: **29.10.2014**
(45) Hinweis auf die Patenterteilung: 07.10.2009
(21) Anmeldenummer: 04001881.4
(22) Anmeldetag: 29.01.2004
(51) Int. Cl.: A01D 41/127

(54) **Methode zur Optimierung von einstellbaren Parametern**
Method for the optimisation of adjustable parameters
Méthode pour l'optimisation de paramètres réglables

(30) Priorität: 17.02.2003 DE 10306726
(43) Veröffentlichungstag der Anmeldung: 18.08.2004
(73) Patentinhaber: CLAAS Selbstfahrende Erntemaschinen GmbH, 33428 Harsewinkel (DE)
(72) Erfinder: Wippersteg, Heinz-Hermann, 32257 Bünde (DE); Fitzner, Werner, 48336 Sassenberg (DE)

(56) Entgegenhaltungen:
- US-A- 4 527 241
- US-A- 5 586 033
- US-A1- 2003 014 171
- US-A1- 2003 216 158
- US-B1- 6 205 384

## Beschreibung

Der Erfindung bezieht sich auf eine Methode zur Optimierung von einstellbaren Parametern nach dem Oberbegriff des Anspruchs 1 (siehe z.B. US-A-5 586 033).

Aus dem Stand der Technik sind eine Vielzahl von Arbeitsmaschinen bekannt, deren Betriebsparameter maßgeblich von den zu bearbeitenden Stoffen, von witterungsbedingten Umwelteinflüssen und von Effektivitätskennwerten der Arbeitsmaschine selbst abhängen. Beispielhaft sei hier auf land- und forstwirtschaftliche Arbeitsmaschinen und auf Produktionsmaschinen, die beispielsweise aus Naturprodukten, sogenannten gewachsenen Rohstoffen, Zwischen- oder Fertigerzeugnisse herstellen, verwiesen.

Einerseits hängt die Art der Weiterverarbeitung von Naturprodukten in erheblichem Maß von der Beschaffenheit der Naturprodukte selbst ab. Dabei bestimmen neben verschiedensten wachstumsbegünstigenden Pflegemaßnahmen insbesondere die Witterungsbedingungen maßgeblich die Qualität des herangewachsenen Naturprodukts, sodass an sich gleiche Produkte aufgrund ihrer erheblich voneinander abweichenden wachstumsbedingten Beschaffenheit völlig unterschiedlich weiterverarbeitet werden müssen, um dennoch das gleiche Zwischen- oder Fertigprodukt zu erhalten. Zum Anderen wird der Ernteprozess solcher Produkte in noch viel stärkerem Maß von der Qualität des zu erntenden Gutes und den witterungsbedingten äußeren Einflüssen bestimmt. Beispielhaft sei hier auf sogenannte Mähdrescher oder Feldhäcksler verwiesen, deren verschiedensten Arbeitsorgane sehr empfindlich auf sich ändernde Eigenschaften des zu erntenden Gutes reagieren. Um trotz zum Teil erheblich schwankender Eigenschaften des Erntegutes und der sich witterungsabhängig ändernden Erntebedingungen die Effektivität dieser Arbeitsmaschinen und die Qualität des zu erntenden Gutes hoch zu halten, werden umfangreiche Anstrengungen zur Optimierung der Betriebsparameter der Arbeitsorgane dieser Maschinen unternommen. Derartige Optimierungsprozesse sind heute durch den Betreiber der jeweiligen Maschine durchzuführen und hängen maßgeblich von seinem Erfahrungswissen und Geschick ab. Um die Qualität dieses Optimierungsprozesses zu erhöhen, kann der Maschinenbetreiber neben seinem Erfahrungswissen auf Herstellerempfehlungen und sensorgenerierte Maschineninformationen zurückgreifen. Insbesondere die sensorgenerierten Maschineninformationen dienen dem Maschinenbetreiber dazu, die Wirkung seiner Einstellmaßnahmen zu beurteilen. Weit verbreitet sind in diesem Zusammenhang sogenannte Verlustsensoren, die insbesondere in als Mähdrescher ausgeführten landwirtschaftlichen Erntemaschinen zur Bestimmung der Kornverluste eingesetzt werden. Dabei liefern die Verlustsensoren dem jeweiligen Kornverlust proportionale Signale, aus denen der Maschinenbetreiber die Information entnehmen kann, ob eine vorgenommene Änderung eines oder mehrerer Betriebsparameter des Mähdreschers zu einer Verringerung oder Erhöhung der möglichst gering zu haltenden Kornverluste geführt hat. Insbesondere bei der Änderung mehrerer Betriebsparameter hängt es maßgeblich von dem Erfahrungswissen des Maschinisten ab, ob er die eingetretene Wirkung dem richtigen Betriebsparameter zuordnet. Ein derartiges Vorgehen führt in der Praxis dazu, dass der Maschinenbetreiber zum Teil sehr viele Maschineneinstellungen testen muss, bevor er eine nach seinen Vorstellungen optimale Einstellung der Maschine erreicht hat, wobei die Zahl dieser Versuche um so höher sein wird, je unerfahrener der Maschinenbetreiber ist. Zudem hat der Maschinenbetreiber während dieser Betriebsparameteroptimierung eine Vielzahl von Informationen zu verarbeiten, ohne dass ihm diesen Optimierungsvorgang unterstützende Hilfsmittel zur Verfügung stehen. Zudem ist die Reproduzierbarkeit einmal ermittelter optimierter Betriebsparameter in Abhängigkeit von verschiedensten maschinen-, erntegut- und umwelt-, insbesondere witterungsspezifischen Parametern nicht gegeben.

Der Erfindung liegt deshalb die Aufgabe zugrunde, eine einfache, den Maschinenbetreiber entlastende Methode zur Optimierung von einstellbaren Parametern zu entwickeln, die kostengünstig und effizient ist.

Erfindungsgemäß wird die Aufgabe mit den kennzeichnenden Merkmalen des Anspruchs 1 gelöst.

Indem die Optimierung der einstellbaren Parameter durch Abarbeitung zumindest eines in einem Datenverarbeitungssystem hinterlegten Vorgehensalgorithmus erfolgt, wird die Optimierung der einstellbaren Parameter weitestgehend von dem Erfahrungswissen des Maschinisten entkoppelt, sodass der durchzuführende Optimierungsprozess schneller zu optimierten Maschineneinstellungen führt. Diese weitgehende Entkoppelung des Optimierungsprozesses von dem Erfahrungswissen des Maschinisten erlangt dann besondere Bedeutung, wenn die Maschinen von Dienstleistern betrieben werden, deren die Maschinen steuernden Maschinisten häufig keine Fachleute auf dem jeweiligen Gebiet sind, sodass sie in der Regel über kein ausgeprägtes oder gar kein Erfahrungswissen verfügen.

Wird die Optimierung der einstellbaren Parameter zudem durch editierbare und/oder speicherbare Zielwertdaten bestimmt, kann auf einfache Weise sichergestellt werden, dass in Abhängigkeit von günstigeren oder schlechteren äußeren Bedingungen auch qualitativ höherwertige oder niedrigerwertige Zielwertdaten definierbar und wiederholt abrufbar sind. Dies hat den Vorteil, dass das optimierende System die erfindungsgemäße Optimierungsmethode nur in realistischen Bereichen der Zielwertdaten anwendet.

Eine besonders einfache Struktur des Datenverarbeitungssystems wird dann erreicht, wenn das Datenverarbeitungssystem als Diagnosesystem aufgebaut ist. Dies hat insbesondere den Vorteil, dass im einfachsten Fall zur Umsetzung des Datenverarbeitungssystems auf eine handelsübliche Software zurückgegriffen werden kann, die dann zur Realisierung der erfindungsgemäßen Methode nur noch an die konkreten Bedingungen der jeweiligen Maschine und/oder des jeweiligen Prozesses angepasst werden muss.

Um die Effizienz und die Genauigkeit der Optimierungsmethode zu erhöhen, kann das Datenverarbeitungssystem sowohl maschineninterne als auch maschinenexterne Daten unter Berücksichtigung von Zielwertdaten verarbeiten und weiterverarbeitbare Ausgangsdaten generieren.

Eine besonders anwenderfreundliche und flexibel an unterschiedlichste Bedingungen anpassbare Optimierungsmethode ergibt sich dann, wenn die maschineninternen Daten und die maschinenexternen Daten sowie die Ausgangsdaten durch das Datenverarbeitungssystem editierbar und speicherbar sind.

Eine weiter vorteilhafte Ausgestaltung wird dann erreicht, wenn das Datenverarbeitungssystem zeitgesteuert arbeitet. Dies hat einerseits den Vorteil, dass insbesondere bei der Optimierung der Betriebsparameter von Landmaschinen auf die tageszeitabhängigen Schwankungen der Ernteguteigenschaften besser eingegangen werden kann. Zudem kann der Optimierungsprozess zeitabhängig wiederholt werden, sodass auf sich ändernde Bedingungen flexibel reagiert werden kann.

Die Effizienz und die Handhabung der Optimierungsmethode erhöht sich auch dadurch weiter, dass die an das Datenverarbeitungssystem übergebenen maschineninternen Daten neben den zu optimierenden einstellbaren Parametern weitere Parameter wie etwa erntegutspezifische und/oder maschinenspezifische Parameter sowie internes Expertenwissen umfassen und deren Generierung über mit der Maschine in Wirkverbindung stehende Sensoren oder durch Eingabe erfolgt.

Eine besonders einfach handhabbare Optimierung ergibt sich dann, wenn die zu optimierenden einstellbaren Parameter von der Fahrgeschwindigkeit, der Drehzahl zumindest einer Dreschtrommel und/oder der Drehzahl des Gebläses der zumindest einen Reinigungseinrichtung gebildet werden und die weiteren Parameter den Kornverlust, den Korndurchsatz, die Erntegutfeuchte, den Erntegutgesamtdurchsatz und/oder den Bruchkornanteil repräsentieren.

Um die universelle Einsetzbarkeit der erfindungsgemäßen Methode weiter zu erhöhen, können die weiteren Parameter auch Einstellbereiche für die Parameter der Arbeitsorgane umfassen.

Die präzise und schnelle Optimierung der einstellbaren Parameter wird auch dadurch unterstützt, dass die maschinenexternen Daten durch externe Systeme generiert werden und geograpfische Daten, Wetterdaten, pflanzenspezifische Daten oder externes Expertenwissen umfassen.

Eine besondere Bedeutung kommt sowohl dem internen als auch dem externen Expertenwissen dann zu, wenn sich dieses Expertenwissen auf erntegut- und maschinenbezogenes Erfahrungswissen stützt.

Um die Effizienz des Optimierungsprozesses weiter zu erhöhen, kann der wenigstens eine in dem Diagnosesystem hinterlegte Vorgehensalgorithmus sogenannte Vorgehensdiagnosen und/oder Falldiagnosen und/oder modellorientierte Diagnosen abarbeiten. Dies hat den Vorteil, dass das Diagnosesystem die Optimierungsmethode anwendungsfallspezifisch anpassen kann. Insbesondere die fallorientierte Diagnose hat den Vorteil, dass hier ein Selbstlerneffekt erreichbar ist, der es ermöglicht, dass das Diagnosesystem in zukünftigen Optimierungen bei ähnlicher Fallgestaltung auf bereits existierende Vorgehensalgorithmen und die damit ermittelten optimierten Parameter zurückgreifen kann. Durch eine derartige Anpassung der Vorgehensalgorithmen kann erreicht werden, dass sich die Qualität und Effizienz der erfindungsgemäßen Optimierungsmethode sukzessive verbessert.

Um eine flexible Anwendbarkeit der erfindungsgemäßen Methode zur Optimierung einstellbarer Parameter zu ermöglichen, ist gemäß der Erfindung vorgesehen, dass der abzuarbeitende Vorgehensalgorithmus des Datenverarbeitungssystems in Abhängigkeit von zumindest einem Teil der maschineninternen und/oder maschinenexternen Daten aus einer Vielzahl von Vorgehensalgorithmen auswählbar ist.

Der Maschinist wird dann weiter von dem Optimierungsvorgang der einstellbaren Parameter der Maschine entlastet, wenn das Datenverarbeitungssystem in Abhängigkeit von den maschineninternen und/oder maschinenexternen Daten den Vorgehensalgorithmus vorschlägt oder selbsttätig auswählt.

Um die Auswahl des geeigneten, in dem Datenverarbeitungssystem hinterlegten Vorgehensalgorithmus zu vereinfachen und zu beschleunigen, sind die maschineninternen und die maschinenexternen Daten sowie die Zielwertdaten in Datensätzen in dem Datenverarbeitungssystem hinterlegt, die zugleich ein Situationsmuster definieren, an das ein ganz konkreter Vorgehensalgorithmus gekoppelt ist. Die Auswahl eines neuen Vorgehensalgorithmus erfolgt dann an Hand dieser Situationsmuster, wobei aus den hinterlegten Situationsmustern ein dem momentanen Situationsmuster nahekommendes oder identisches Situationsmuster und folglich der mit diesem Situationsmuster verknüpfte Vorgehensalgorithmus zur Abarbeitung auf einfache Weise auswählbar ist.

Eine weitere Erhöhung der Flexibilität der erfindungsgemäßen Methode wird dann erreicht, wenn das Datenverarbeitungssystem in Abhängigkeit von den maschinenintern und maschinenexternen Daten und unter Berücksichtigung veränderbarer Zielwertdaten veränderte Vorgehensalgorithmen und/oder Situationsmuster generieren kann. Auf diese Weise wird es möglich, dass die hinterlegten Vorgehensalgorithmen und Situationsmuster sehr präzise an einzelne Anwendungsfälle anpassbar sind und bei zukünftigen ähnlich gelagerten Anwendungsfällen zeitsparend unmittelbar abgerufen werden können, ohne zuvor bereits hinterlegte Vorgehensalgorithmen und/oder Situationsmuster an die neuen Anwendungsbedingungen anpassen zu müssen.

Um die erfindungsgemäße Optimierungsmethode maschinenübergreifend effizient anwenden zu können, ist in einer weiteren vorteilhaften Ausgestaltung der Erfindung vorgesehen, dass die Situationsmuster und zugehörige Vorgehensalgorithmen und/oder die optimierten einstellbaren Parameter für weitere Maschinen verfügbar in dem Datenverarbeitungssystem hinterlegt sind.

Ein besonders vorteilhafter Anwendungsfall ergibt sich dann, wenn die Maschine eine landwirtschaftliche Erntemaschine ist und der Vorgehensalgorithmus in Abhängigkeit von den Erntebedingungen der landwirtschaftlichen Erntemaschine bestimmt wird. Da der Maschinist während des Erntevorgangs bereits eine Vielzahl, den Erntevorgang unmittelbar betreffende Steuerungs- und Überwachungsfunktionen auszuführen hat, wird er durch Anwendung der erfindungsgemäßen Methode weitestgehend von Optimierungsfunktionen entlastet, sodass er sich im Wesentlichen auf den eigentlichen Ernteprozess konzentrieren kann.

Um die Optimierungsergebnisse des der erfindungsgemäßen Methode zugrundeliegenden Datenverarbeitungssystems weiter zu verbessern, können die in dem Datenverarbeitungssystem hinterlegten Vorgehensalgorithmen zudem durch Expertenbefragung an neu oder veränderte Bedingungen anpassbar sein.

Weitere vorteilhafte Ausgestaltungen sind Gegenstand weiterer Unteransprüche und werden nachfolgend an Hand eines in Zeichnungen dargestellten Ausführungsbeispiels näher erläutert.

Es zeigen
- Figur 1: schematische Seitenansicht einer landwirtschaftlichen Erntemaschine
- Figur 2: Anordnungsschema der erfindungsgemäßen Datenverarbeitungseinrichtung
- Figur 3: allgemeine Struktur der erfindungsgemäßen Methode in Signalflussbilddarstellung
- Figur 4: weitere allgemeine Struktur der erfindungsgemäßen Methode in Signalflussbilddarstellung
- Figur 5: konkretes Ausführungsbeispiel der allgemeinen Struktur der erfindungsgemäßen Methode in Signalflussbilddarstellung

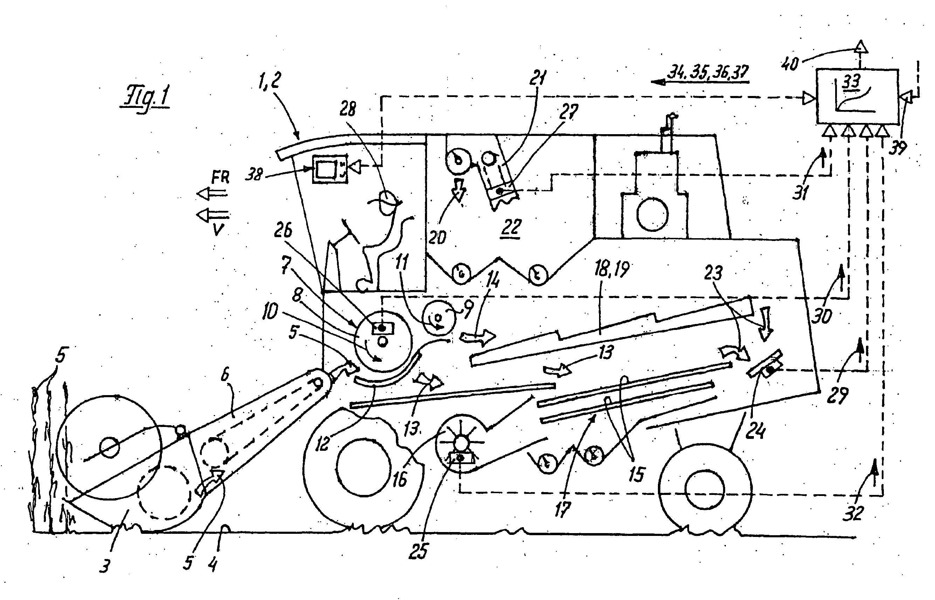

In den Figuren 1-5 ist die erfindungsgemäße Methode zur Optimierung einstellbarer Parameter an einem landwirtschaftlichen Anwendungsfall näher erläutert. Die Erfindung ist nicht auf den dargestellten Anwendungsfall beschränkt, sondern kann auf verschiedensten Gebieten angewendet werden, um die beschriebenen Effekte zu erzielen.

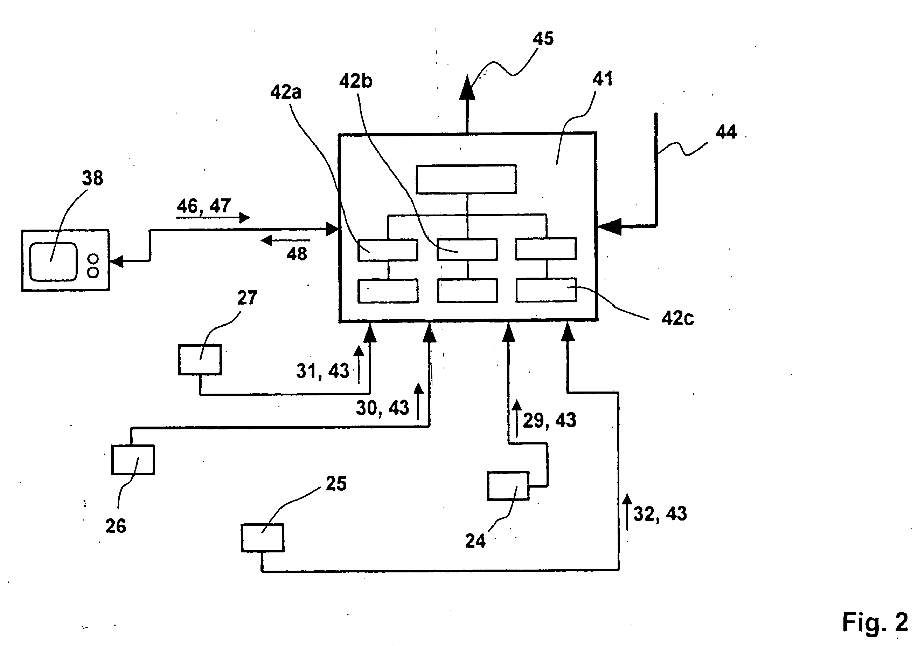

Zunächst wird an der in den Figuren 1 und 2 dargestellten, als Mähdrescher 2 ausgeführten landwirtschaftlichen Erntemaschine 1 die erfindungsgemäße Methode zur Optimierung einstellbarer Parameter in ihrer allgemeinen Form beschrieben. Der landwirtschaftlichen Erntemaschine 1 ist in ihrem in Fahrtrichtung FR weisenden frontseitigen Bereich ein sogenanntes Getreideschneidwerk 3 zugeordnet, welches das auf dem Boden 4 wachsende Erntegut 5 aberntet, zusammenführt und in seinem rückwärtigen Bereich einem Schrägförderorgan 6 des Mähdreschers 2 zuführt. Das Schrägförderorgan 6 übergibt das Erntegut 5 in seinem rückwärtigen Bereich an ein Dreschorgan 7, welches im dargestellten Ausführungsbeispiel aus einer Dreschtrommel 8 und einer dieser nachgeordneten Wendetrommel 9 besteht. Es liegt im Rahmen der Erfindung, dass das Dreschorgan 7 in an sich bekannter Weise mehrere Dreschtrommeln 8 aufnehmen oder als sogenannter Axial-Dresch- und Trennrotor ausgebildet sein kann. Durch die Rotationsbewegung 10, 11 der Dreschtrommel 8 und der ihr nachgeordneten Wendetrommel 9 wird das Erntegut 5 entlang eines Dresch- und Abscheidekorbes 12 in den rückwärtigen Bereich des Dreschorgans 7 gefördert. Dabei wird der Erntegutstrom 5 in verschiedene Gutströme 13, 14 aufgeteilt, wobei der durch den Dresch- und Abscheidekorb 12 abgeschiedene Gutstrom 13 überwiegend von Körnern und der im rückwärtigen Bereich des Dreschorgans 7 austretende Gutstrom 14 überwiegend von Stroh gebildet wird. Nachdem die aus dem Dreschorgan 7 austretenden Gutströme 13, 14 weitere Arbeitsorgane, wie etwa eine aus ein oder mehreren Siebebenen 15 und einem diesen Siebebenen 15 zugeordneten Gebläse 16 bestehende Reinigungseinrichtung 17 sowie eine als Hordenschüttler 18 ausgeführte Trenneinrichtung 19 durchlaufen haben, werden die nun im Wesentlichen von Beimengungen befreiten Körner 20 über nicht näher dargestellte Förderorgane 21 einer auf dem Mähdrescher 2 angeordneten Speichereinrichtung 22 zugeführt. Je nach Arbeitsqualität der Arbeitsorgane 7, 17, 19 und der Beschaffenheit des Erntegutes 5 tritt ein mehr oder weniger großer Körnerstrom 23 im rückwärtigen Bereich des Mähdreschers 2 aus diesem aus. Dieser Körnerstrom 23 bildet den sogenannten Kornverlust, der mittels an sich bekannter und deshalb nicht näher erläuterter Kornverlustsensoren 24 ermittelt werden kann. Betreiber 28 derartiger landwirtschaftlicher Erntemaschinen 1 sind bestrebt diesen Kornverlust 23 möglichst gering zu halten. Hierfür konnte der Mähdrescher 2 bisher neben den bereits beschriebenen Körnersensoren 24 je nach Ausstattungsgrad mit weiteren Sensoren 25, 26, 27 bestückt sein, die im einfachsten Fall zum Beispiel als Drehzahlsensoren 25, 26 zur Ermittlung der Drehzahl des Gebläses 16 sowie der Dreschtrommel 8 ausgebildet waren. Weiter war es auch bisher bereist bekannt, sogenannte Durchsatzsensoren 27 einzusetzen, die beispielsweise die den Mähdrescher 2 durchlaufende Kornmenge 20 ermitteln. Die von den verschiedenen Sensoren 25-27 generierten Signale 29-32 wurden in einer auf dem Mähdrescher 2 angeordneten Verrechnungseinheit 33 beispielsweise in Dreschtrommeldrehzahlsignale 34, Kornverlustsignale 35, Korndurchsatzsignale 36 und Gebläsedrehzahlsignale 37 umgewandelt, die dann über eine Anzeigeeinheit 38 dem Betreiber 28 permanent oder auf Abruf angezeigt wurden. Ferner ist es auch bekannt anstelle der Gesamtkornverluste 23 mittels der Kornsensoren 22 die Verluste einzelner Arbeitsorgane wie etwa der Reinigungseinrichtung 17 oder der Trenneinrichtung 19 separat zu bestimmen. Zudem ist es aus dem Stand der Technik bekannt den Bruchkornanteil des geernteten Körnerstromes 20 zu ermitteln und dem Betreiber 28 anzuzeigen. Die Verrechnungseinheit 33 konnte zudem von externen Systemen Informationen 39 empfangen oder Informationen 40 an externe Systeme übermitteln. Bei derartigen Systemen beschränkt sich die Optimierung einstellbarer Parameter darauf, dass der Betreiber 28 einzelne Parameter der Arbeitsorgane 7, 17, 19 oder die Fahrgeschwindigkeit ändert und an Hand der ermittelten Kornverluste 35 oder des Körnerbruchs deren Einfluss auf die Arbeitsqualität der landwirtschaftlichen Erntemaschine 1 abschätzt und bei nicht zufriedenstellenden Ergebnissen, die einstellbaren Parameter solange ändert, bis ein akzeptables Arbeitsergebnis des Mähdreschers 2 erreicht wird. Ein solches Vorgehen zur Optimierung einstellbarer Parameter ist sehr zeit- und arbeitsaufwendig. Hier setzt nun die erfindungsgemäße Methode der Optimierung einstellbarer Parameter an.

Gemäß Figur 2 sind nun die an sich bekannten Sensoren 24-27 mit einem noch näher zu beschreibenden Datenverarbeitungssystem 41 verbunden, in welchem ebenfalls noch näher zu beschreibende Vorgehensalgorithmen 42a-c hinterlegt sind. Es liegt im Rahmen der Erfindung, dass das Datenverarbeitungssystem 41 mit beliebigen auf der landwirtschaftlichen Arbeitsmaschine 1 angeordneten Sensoren in Wirkverbindung stehen kann, wobei das Datenverarbeitungssystem 41 entweder unmittelbar auf der landwirtschaftlichen Erntemaschine 1 installiert ist beziehungsweise durch den Betreiber 28 als separate Einrichtung mitgeführt wird oder an zentraler Stelle stationär angeordnet ist. In den letzten beiden Fällen wäre es dann sinnvoll, die Übertragung der jeweiligen Sensorsignale 29-32 zum Datenverarbeitungssystem 41 und von dem Datenverarbeitungssystem 41 zur landwirtschaftlichen Arbeitsmaschine 1 drahtlos auszulegen. Neben den die maschineninternen Daten 43 bildenden Sensorsignalen 29-32 kann das erfindungsgemäße Datenverarbeitungssystem 41 zudem von externen Systemen sogenannte maschinenexterne Daten 44 empfangen oder Daten 45 an externe Systeme übertragen. Weiter steht das Datenverarbeitungssystem 41 im Datenaustausch mit der Anzeigeeinheit 38, wobei dieser Datenaustausch einerseits die Eingabe von beliebigen Daten 46, insbesondere aber noch näher zu beschreibender Zielwertdaten 47 durch den Betreiber 28 und andererseits die Anzeige von durch das Datenverarbeitungssystem 41 generierte Ausgangsdaten 48 umfasst.

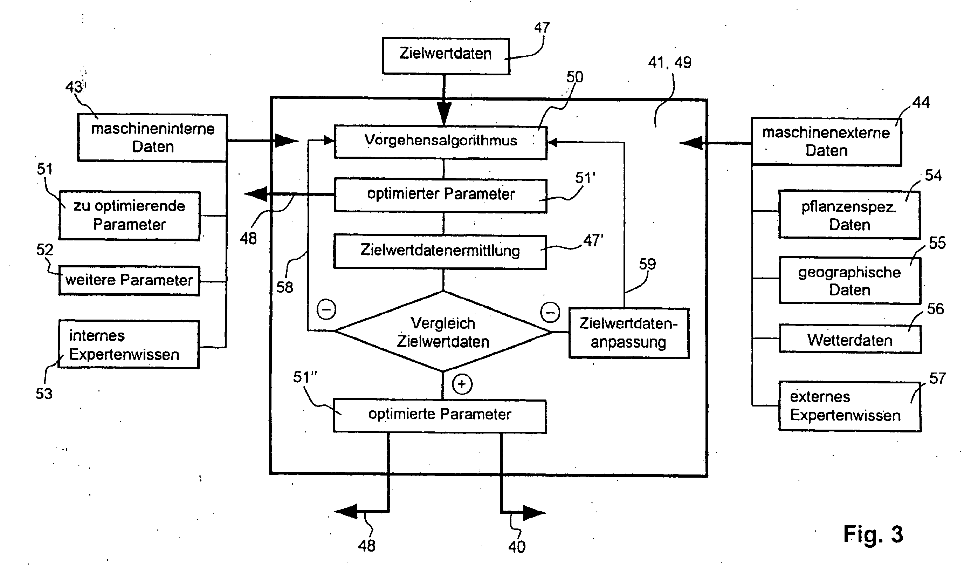

Gemäß Figur 3 ist das Datenverarbeitungssystem 41 als Diagnosesystem 49 ausgeführt, wobei in dem Diagnosesystem 49 zumindest ein noch näher zu erläuternder Vorgehensalgorithmus 50 zur Optimierung einstellbarer Parameter hinterlegt ist. Die Informationsbasis des Diagnosesystems 49 bilden die in das Diagnosesystem 49 eingebbaren maschineninternen und maschinenexterne Daten 43, 44. Wichtigste maschineninterne Daten 43 sind die zu optimierenden Parameter 51, die im einfachsten Fall die Fahrgeschwindigkeit v der landwirtschaftlichen Erntemaschine 1, die Drehzahl einer oder mehrerer Dreschtrommeln 8 sowie die Drehzahl des Gebläses 16 der Reinigungseinrichtung 17 sein können. Es liegt im Rahmen der Erfindung, dass hierunter beliebige aber einstellbare Parameter 51 einer Maschine zu verstehen sind, sofern deren Veränderung, einer Optimierung gleichkommend, zu einer Verbesserung der Arbeitsweise sowie der Arbeitsqualität der jeweiligen Maschine führt. Die maschineninternen Daten 43 umfassen zudem sogenannte weitere Parameter 52, die im dargestellten Ausführungsbeispiel sowohl erntegutspezifische als auch maschinenspezifische Daten betreffen. Zu den erntegutspezifischen maschineninternen Daten 43 zählen insbesondere die Kornverluste 23 und der Korndurchsatz 20. Weiter können hierzu unter anderem die Erntegutfeuchte, der Erntegutgesamtdurchsatz sowie der Bruchkornanteil zählen, wobei deren Ermittlung in an sich bekannter und deshalb nicht beschriebener Weise mittels Sensoren oder durch Eingabe in das Datenverarbeitungssystem 41 erfolgen kann. Maschinenspezifische maschineninterne Daten 43 betreffen in erster Linie auf die konkrete Maschine bezogene Parametereinstellbereiche für die einzelnen Arbeitsorgane 7, 17, 19 und basieren in der Regel auf allgemeinen maschinentypbezogenen Herstellerinformationen. Zudem können die maschineninternen Daten 43 sogenanntes internes Expertenwissen 53 beinhalten, wobei das interne Expertenwissen im einfachsten Fall von dem Betreiber 28 der Maschine 1 generiert wird und im Wesentlichen auf dessen Kenntnissen und Erfahrungen beruht. Im hier beschriebenen landwirtschaftlichen Anwendungsfall betrifft dieses interne Expertenwissen 53 insbesondere das Wissen um die Wechselwirkungen zwischen den Ernteguteigenschaften und den einstellbaren Parametern der Arbeitsorgane sowie deren Auswirkung auf die Effizienz und Arbeitsqualität der landwirtschaftlichen Erntemaschine 1.

Die an das Diagnosesystem 49 übermittelbaren maschinenexternen Daten 44 beziehen sich im Wesentlichen auf pflanzenspezifische Daten 54, auf geographische Daten 55 und Witterungsdaten 56 aus dem jeweiligen Einsatzgebiet der landwirtschaftlichen Erntemaschine 1 sowie auf sogenanntes externes Expertenwissen 57. Derartige Informationen sind beispielsweise über globale Datenaustausch- und Informationssysteme wie etwa das Internet abrufbar. Insbesondere für den beschriebenen landwirtschaftlichen Anwendungsfall sind genaue Kenntnisse über die Eigenschaften des Erntegutes, die geographische Beschaffenheit des abzuerntenden Territoriums, die Witterungsverhältnisse in diesem Territorium sowie Expertenwissen von besonderer Bedeutung. Dies hängt insbesondere damit zusammen, dass die möglichen Erntezeiträume sehr kurz sind und die Effizienz der landwirtschaftlichen Erntemaschine 1 im Ernteprozess maßgeblich von der optimalen Abstimmung der einstellbaren Parameter 51 auf die Ernteguteigenschaften unter Berücksichtigung der äußeren Einflüsse abhängt.

Damit der in dem Diagnosesystem 49 hinterlegte Vorgehensalgorithmus 50 in erfindungsgemäßer Weise zu einer Optimierung der einstellbaren Parameter 51 der landwirtschaftlichen Arbeitsmaschine 1 führt, sind in das Diagnosesystem 49 zudem wie bereits beschrieben Zielwertdaten 47 eingebbar, wobei in dem beschriebenen landwirtschaftlichen Anwendungsfall die Zielwertdaten 47 zum Beispiel Grenzwerte für den Kornverlust 23 sowie den Körnerbruch sein können.

Sowohl die maschineninternen und maschinenexternen Daten 43, 44 als auch die Zielwertdaten 47 bilden in ihrer Gesamtheit oder in Teilen die Eingangsdaten für den in dem Diagnosesystem 49 hinterlegten Vorgehensalgorithmus 50. Aus diesen Eingangsdaten ermittelt der Vorgehensalgorithmus 50 in noch näher zu beschreibender Weise optimierte einstellbare Parameter 51', die entweder als sogenannte Ausgangsdaten 48 unmittelbar an den betreffenden Arbeitsorganen 7, 17, 19 selbsttätig eingestellt oder dem Betreiber 28 über die Anzeigeeinheit 38 angezeigt werden. In letzterem Fall muss der Betreiber 28 die Einstellung der optimierten Parameter 51' selbst vornehmen. Nach der Einstellung der optimierten Parameter 51' werden in der bereits beschriebenen Weise die erreichten Zielwertdaten 47', wie etwa der Kornverlust 23, ermittelt. In einem weiteren Schritt werden die ermittelten Zielwertdaten 47' mit den vordefinierten Zielwertdaten 47 verglichen. Entsprechen die ermittelten Zielwertdaten 47' nicht den vordefinierten Zielwertdaten 47, wird der Vorgehensalgorithmus 50 entweder solange gemäß dargestellter Schleife 58 wiederholt, bis die vordefinierten Zielwerte 47 erreicht werden oder es erfolgt gemäß der weiteren Schleife 59 eine Anpassung des vordefinierten Zielwertes 47 mit dem dann der Vorgehensalgorithmus 50 erneut abgearbeitet wird. Diese Anpassung des Zielwertes 47 ist insbesondere dann von Vorteil, wenn die Eigenschaften des Erntegutes 5 oder die äußeren Bedingungen die vordefinierten Zielwerte 47 überhaupt nicht oder nur bei nicht sinnvollen Parametern 51' der Arbeitsorgane 7, 17, 19 zulassen.

Wurde der Vorgehensalgorithmus 50 erfolgreich durchlaufen, d.h. die ermittelten optimierten Parameter 51' führen zu Zielwertdaten 47' die den vordefinierten Zielwertdaten 47 entsprechen, generiert das Diagnosesystem optimierte einstellbare Parameter 51" die entweder wie bereits beschrieben als Ausgangsdaten 48 dem Betreiber 28 zur Anzeige gebracht werden oder unmittelbar an den jeweiligen Arbeitsorganen 7, 17, 19 selbsttätig durch die landwirtschaftliche Arbeitsmaschine 1 eingestellt werden. Zudem können diese optimierten Parameter 51" und die ihnen zugrundeliegenden maschinenintern und maschinenexternen Daten 43, 44 als Informationen 40 Dritten zugänglich gemacht werden.
Um eine hohe Flexibilität des erfindungsgemäßen Datenverarbeitungssystems 41 zu gewährleisten, sind die in das Datenverarbeitungssystem 41 eingebbaren maschineninternen Daten 43, die maschinenexternen Daten 44 und die Zielwertdaten 47 sowie die von dem Datenverarbeitungssystem 41 generierten Ausgangsdaten 40, 48 editier- und speicherbar. Dies hat zudem den Vorteil, dass die eingegebenen Daten 43, 44, 47 sowie die von dem Datenverarbeitungssystem 41 generierten Daten 40, 48 reproduzierbar sind und beliebig oft abgerufen werden können.

Da sich insbesondere bei der Ernte von landwirtschaftlichen Gütern tageszeitabhängig die die Effizienz der Erntemaschine 1 maßgeblich bestimmenden Erntebedingungen erheblich ändern, ist in einer weiteren vorteilhaften Ausgestaltung vorgesehen, dass der Vorgehensalgorithmus 50 zeitgesteuert arbeitet. Dies hat vor allem den Vorteil, dass die Optimierung der einstellbaren Parameter 51 in Abhängigkeit von der Tageszeit mehrfach wiederholt werden kann, wobei es im Rahmen der Erfindung liegt, dass die Zeitsteuerung selbsttätig abläuft, ohne dass der Maschinist 28 den neuerlichen Optimierungsvorgang auslösen muss.

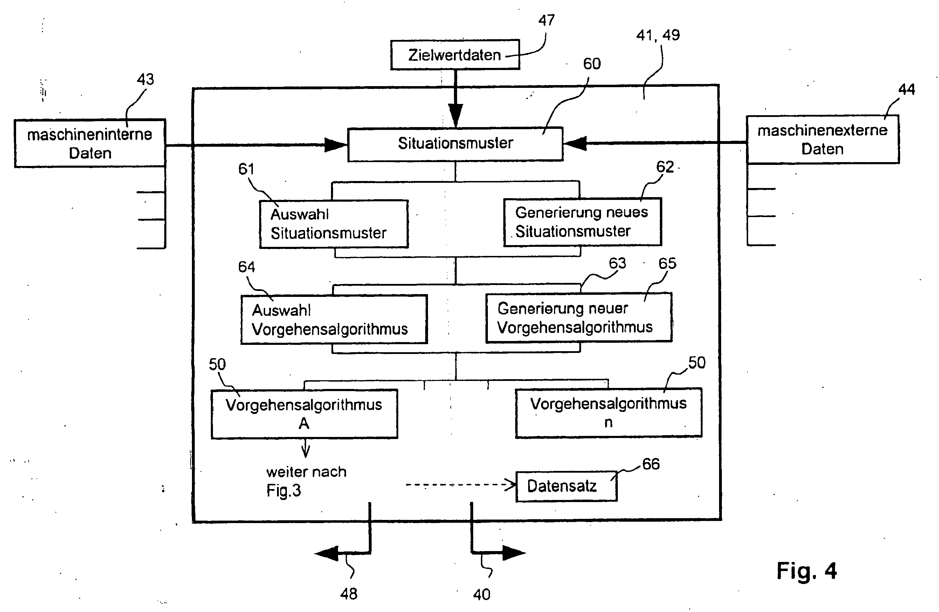

Gemäß Figur 4 sind erfindungsgemäß in dem Diagnosesystem 49 eine Vielzahl von Vorgehensalgorithmen 50 hinterlegt sein. Dies hat insbesondere den Vorteil, dass zur Optimierung der einstellbaren Parameter 51 ein Vorgehensalgorithmus 50 aus einer Vielzahl von Vorgehensalgorithmen 50 ausgewählt werden kann, der in Abhängigkeit von den zugrundeliegenden internen und externen Daten 43, 44 sowie den Zielwertdaten 47 bereits nach kurzer Optimierungszeit zu optimierten einstellbaren Parametern 51 führt. Insbesondere in Abhängigkeit von der Erntegutart, der Erntegutfeuchte, der Hangneigung und der zur Verfügung stehenden Erntezeit kann die Optimierung bestimmter Parameter 51 Vorrang haben oder ist es überhaupt nur sinnvoll ganz bestimmte Parameter 51 in ganz bestimmten Bereichen zu variieren, um in möglichst kurzer Zeit die vorgegebenen oder angepasste Zielwertdaten 47 zu erreichen. Liegen beispielsweise günstige Erntebedingungen vor (niedrige Erntegutfeuchte, ebenes Gelände) so kann der als Zielwertdaten 47 vorgebbare Kornverlust 23 schnell und präzise dadurch erreicht werden, dass der auszuwählende Vorgehensalgorithmus 50 als Vorgehensdiagnose fest vorgegeben ist. Da keine besonderen Randbedingungen zu berücksichtigen sind, werden die zu optimierenden Parameter 51 der Arbeitsorgane 7, 17, 19 in einer in dem Vorgehensalgorithmus 50 definierten Reihenfolge eingestellt. Weiter können die hinterlegten Vorgehensalgorithmen 50 auch als Falldiagnosen aufgebaut sein. Dies hat insbesondere den Vorteil, dass in Abhängigkeit von den durch die maschineninternen Daten 43, die maschinenexternen Daten 44 und die Zielwertdaten 47 vorgegebenen Randbedingungen ganz bestimmte Einsatzfälle vordefiniert sind, für die spezielle Vorgehensalgorithmen 50 in dem Diagnosesystem 49 hinterlegt sein können, die dann auf den speziellen Anwendungsfall angepasst abgerufen werden. Wie im Folgenden noch näher beschrieben wird hat dies insbesondere den Vorteil, dass das Diagnosesystem 49 einen sogenannten Selbstlerneffekt erreicht und die hinterlegten Vorgehensalgorithmen 50 immer präziser auf ganz bestimmte Einsatzfälle anpassbar sind, sodass der für die Optimierung der einstellbaren Parameter 51 erforderliche Zeitraum immer geringer wird. Die Effizienz dieses Selbstlerneffekts kommt besonders wirkungsvoll dann zur Geltung, wenn der Vorgehensalgorithmus 50 sogenannte modellorientierte Diagnosen abarbeitet, die universell einsetzbar und vom Betreiber 28 der landwirtschaftlichen Maschine 1 einfach zu bedienen und an konkrete Maschinenmodelle anpassbar sind. Hierbei erstreckt sich der Lerneffekt nicht allein auf einen konkreten Einzelfall sondern wirkt sich auf eine Vielzahl von ähnlichen Anwendungsfällen aus, die mit dem auf modellorientierter Diagnose basierenden Vorgehensalgorithmus 50 abgearbeitet werden.

Das Datenverarbeitungssystem 41 ist so konzipiert, dass es in Abhängigkeit von den maschineninternen Daten 43 und/oder den maschinenexternen Daten 44 und/oder den Zielwertdaten 47 aus der Vielzahl von in ihm hinterlegten Vorgehensalgorithmen 50 den für den speziellen Anwendungsfall geeigneten Vorgehensalgorithmus 50 vorschlägt oder selbsttätig auswählt. Dies erfolgt gemäß Figur 4 in der Weise, dass in dem erfindungsgemäßen Datenverarbeitungssystem 41 noch näher zu beschreibende anwendungsfallspezifische Situationsmuster 60 hinterlegt sind, die von einer Auswahl maschineninterner Daten 43, maschinenexterner Daten 44 und Zielwertdaten 47 definiert werden. Während eines konkreten Maschineneinsatzes werden in das Datenverarbeitungssystem 41 den konkreten Maschineneinsatz betreffende maschineninterne Daten 43, maschinenexterne Daten 44 und Zielwertdaten 47 wie bereits beschrieben eingegeben, die dann in dem Datenverarbeitungssystem 41 zu einem konkreten Situationsmuster 60 zusammengefasst werden. Dieses konkrete Situationsmuster 60 wird dann mit den in dem Datenverarbeitungssystem 41 hinterlegten Situationsmustern 60 verglichen und ein dem konkreten Situationsmuster 60 nahekommendes oder identisches Situationsmuster 61 ausgewählt. Das Datenverarbeitungssystem 41 ist zudem so programmiert, dass es bei erheblichen Abweichungen zwischen dem konkreten Situationsmuster 60 und den vordefinierten Situationsmustern 60 neue Situationsmuster 62 generieren und in dem Datenverarbeitungssystem 41 hinterlegen kann. Die in dem Datenverarbeitungssystem 41 hinterlegten Situationsmuster 60-62 sind über einen vergleichenden Programmschritt 63 mit den ebenfalls in dem Datenverarbeitungssystem 41 hinterlegten Vorgehensalgorithmen 50 in der Weise verknüpft, dass entweder unmittelbar die Auswahl 64 eines bereits hinterlegten Vorgehensalgorithmus 50 erfolgt oder durch einen weiteren Programmschritt 65 ein neuer Vorgehensalgorithmus 50 generiert wird. Hat das Datenverarbeitungssystem 41 nach Durchlaufen des Programmschritts 63 einen geeigneten Vorgehensalgorithmus 50 ermittelt erfolgt die weitere Abarbeitung gemäß der Beschreibung zu Figur 3. Damit die Situationsmuster 60-62 sowie die Vorgehensalgorithmen 50 reproduzierbar sind ist das Datenverarbeitungssystem 41 so ausgelegt, dass es die Situationsmuster 60-62 und die Vorgehensalgorithmen 50 in Datensätzen 66 hinterlegt, die zumindest eine Auswahl der maschineninternen Daten 43, der maschinenexternen Daten 44 und der Zielwertdaten 47 umfassen, sodass bei nachfolgenden diesen Datensätzen 66 entsprechenden Einsatzbedingungen unmittelbar auf die jeweiligen Situationsmuster 60-62 und Vorgehensalgorithmen 50 zugegriffen werden kann. Zudem ist das Datenverarbeitungssystem 41 so strukturiert, dass die Datensätze 66 Dritten als Informationen 40 zugänglich sind. Dies hat insbesondere den Vorteil, dass unter gleichen oder ähnlichen Bedingungen eingesetzte Erntemaschinen 1 mit geringem Aufwand und schnell auf bereits optimierte einzustellende Parameter 51 zugreifen können.

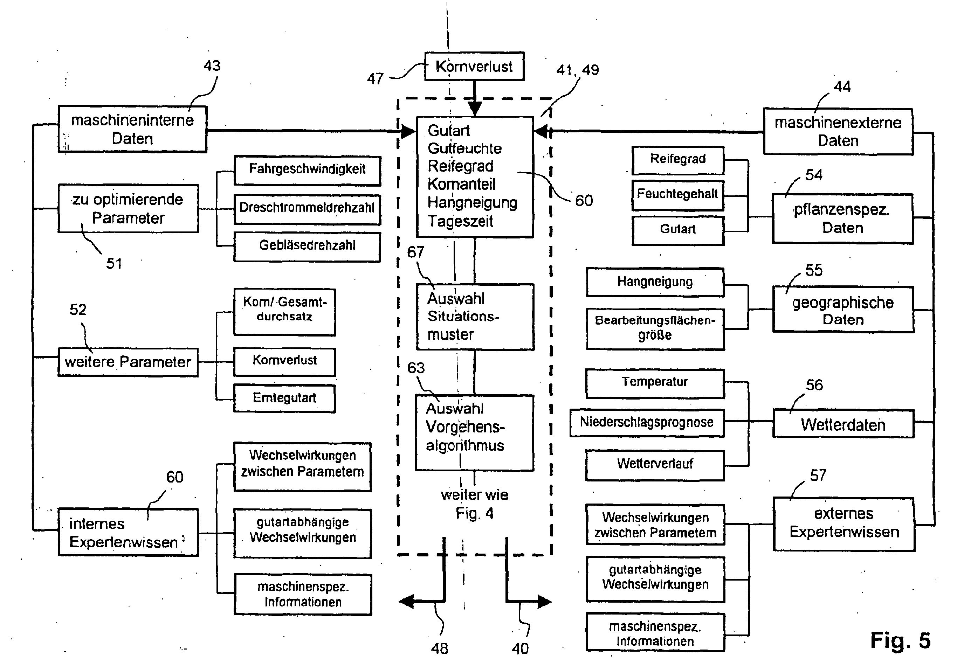

Figur 5 zeigt schematisch einen konkreten Anwendungsfall für die erfindungsgemäße Methode ohne auf diese beschränkt zu sein. In dem dargestellten Beispiel sind die das Optimierungskriterium bildenden Zielwertdaten 47 der Kornverlust einer als Mähdrescher 2 ausgeführten landwirtschaftlichen Erntemaschine 1. Die zu optimierende Parameter 51 umfassen hier die Fahrgeschwindigkeit der Erntemaschine 1, die Drehzahl der Dreschtrommel 8 und die Drehzahl des Gebläses 16 der Reinigungseinrichtung 17. Die weiteren Parameter 52 der maschineninternen Daten 43 sind hier der Korn- und/oder Gesamtdurchsatz, der Kornverlust sowie die Erntegutart. Das interne Expertenwissen 53 umfasst die dem Betreiber 28 bekannten Wechselwirkungen zwischen den von den verschiedenen maschineninternen und maschinenexternen Daten 43, 44 abhängenden zu optimierenden Parametern 51 sowie den weiteren Parametern 52, wobei hier insbesondere gutartabhängige Wechselwirkungen eine besondere Rolle spielen sowie maschinenspezifische Informationen. Die pflanzenspezifischen Daten 54 als ein Bereich der maschinenexternen Daten 44 umfassen zum Beispiel die Erntegutart, den Reifegrad sowie den Feuchtegehalt des Erntegutes. Bezüglich der geographischen Daten sind die Bearbeitungsflächengröße und die Unebenheiten der Bearbeitungsfläche von besonderer Bedeutung. Um Rückschlüsse auf die mögliche Einsatzzeit ziehen zu können, umfassen die Wetterdaten 56 Lufttemperaturangaben, Niederschlagsprognosen sowie Wetterverlaufsprognosen. Das externe Expertenwissen 57 ist im dargestellten Ausführungsbeispiel analog dem internen Expertenwissen 53 strukturiert.

Aus der Vielzahl von maschineninternen Daten 43, maschinenexternen Daten 44 und Zielwertdaten 47 wird in dem Datenverarbeitungssystem 41 ein momentanes Situationsmuster 60 generiert, welches sich im vorliegenden Fall aus Informationen über die Gutart, die Gutfeuchte, den Reifegrad, den Kornanteil, die Hangneigung und der Tageszeit zusammensetzt, wobei die Daten entweder qualitativ (niedrig, mittel, hoch) oder quantitativ als konkrete Zahlenwerte hinterlegt sein können. Es liegt im Rahmen der Erfindung, dass sich das Situationsmuster 60 aus beliebig anderen für andere Anwendungsfälle sinnvollen Parametern zusammensetzen kann. In einem ersten Programmschritt 67 vergleicht das Datenverarbeitungssystem 41 das konkrete Situationsmuster 60 mit den hinterlegten Situationsmustern 60 und wählt für den weiteren Programmablauf ein dem konkreten Situationsmuster 60 nahekommendes oder gleiches Situationsmuster 60 aus. In einem weiteren Programmschritt 63 wird wie bereits zu Figur 4 beschrieben der mit dem gewählten Situationsmuster 60 verknüpfte Vorgehensalgorithmus 50 aktiviert und abgearbeitet. Die Abarbeitung des ausgewählten Vorgehensalgorithmus 50 geht bereits aus Figur 3 hervor. In Abhängigkeit von den maschinenintern und maschinenexternen Daten 43, 44 sowie den Zielwertdaten 47 definiert der Vorgehensalgorithmus optimierte Parameter 51', die dann entweder selbsttätig an den Arbeitsorganen 7, 17, 19 eingestellt oder dem Betreiber 28 der Erntemaschine 1 zur Einstellung angezeigt werden. Mit diesen optimierten Parametern 51' wird die Erntemaschine 1 sodann betrieben und mittels der Kornverlustsensoren 24 werden die momentanen Kornverluste 23 der Erntemaschine 1 ermittelt. Diese momentanen Kornverluste 23 werden als Teil der maschineninternen Daten 43 dem Datenverarbeitungssystem 41 übermittelt und in diesem mit den vorgegebenen Zielwertdaten 47 verglichen. Stimmen diese ermittelten Zielwertdaten 47' mit den vorgegebenen Zielwertdaten 47 überein, endet die Abarbeitung des gewählten Vorgehensalgorithmus 50. Stimmen die ermittelten Zielwertdaten 47' nicht mit den vordefinierten Zielwertdaten 47 überein wird der Vorgehensalgorithmus 50 gemäß Figur 3 solange durchlaufen bis optimierte Parameter 51" erreicht werden, wobei es auch möglich ist, dass das Datenverarbeitungssystem 41 eine Zielwertdatenanpassung 59 vornehmen kann. Eine nach dieser Methode vorgenommene Optimierung der einstellbaren Parameter 51 einer landwirtschaftlichen Erntemaschine 1 berücksichtigt eine Vielzahl von Randbedingungen, die bei einer vom Maschinisten durchgeführten Optimierung nicht beherrschbar wäre. Trotz der großen Anzahl von Parametern ist mittels der erfindungsgemäßen Methode eine schnelle und präzise Optimierung der einstellbaren Parameter 51 möglich. Zudem ist durch die Hinterlegung der verschiedenen Datensätze 66 in dem Datenverarbeitungssystem 41 eine schnelle Reproduzierbarkeit gegeben, die außerdem eine beliebige Anpassung der Datensätze 66 ermöglicht. Dies ist insbesondere deshalb von erheblicher Bedeutung, da sich das berücksichtigte Expertenwissen ständig vervollkommnet und so permanent und unkompliziert auf aktuellem Wissensstand gehalten werden kann.

### Bezugszeichenliste

- 1: landwirtschaftliche Erntemaschine
- 2: Mähdrescher
- 3: Getreideschneidwerk
- 4: Boden
- 5: Erntegutstrom
- 6: Schrägförderer
- 7: Dreschorgan
- 8: Dreschtrommel
- 9: Wendetrommel
- 10: Drehrichtung
- 11: Drehrichtung
- 12: Dresch- und Abscheidekorb
- 13: Gutstrom
- 14: Gutstrom
- 15: Siebebenen
- 16: Gebläse
- 17: Reinigungseinrichtung
- 18: Hordenschüttler
- 19: Trenneinrichtung
- 20: Körnerstrom
- 21: Förderorgan
- 22: Speichereinrichtung
- 23: Kornverluststrom
- 24: Kornverlustsensor
- 25: Drehzahlsensor
- 26: Drehzahlsensor
- 27: Durchsatzsensor
- 28: Betreiber
- 29: Sensorsignal
- 30: Sensorsignal
- 31: Sensorsignal
- 32: Sensorsignal
- 33: Verrechnungseinheit
- 34: Dreschtrommeldrehzahlsignal
- 35: Kornverlustsignal
- 36: Korndurchsatzsignal
- 37: Gebläsedrehzahl
- 38: Anzeigeeinheit
- 39: Informationen
- 40: Informationen
- 41: Datenverarbeitungssystem
- 42a-c: Vorgehensalgorithmen
- 43: maschineninterne Daten
- 44: maschinenexterne Daten
- 45: Übertragungsdaten
- 46: Eingabedaten
- 47: Zielwertdaten
- 48: Ausgabedaten
- 49: Diagnosesystem
- 50: Vorgehensalgorithmus
- 51: zu optimierende Parameter
- 52: weitere Parameter
- 53: internes Expertenwissen
- 54: pflanzenspezifische Daten
- 55: geographische Daten
- 56: Wetterdaten
- 57: externes Expertenwissen
- 58: Iterationsschleife
- 59: Iterationsschleife
- 60: Situationsmuster
- 61: Situationsmuster
- 62: Situationsmuster
- 63: Programmschritt
- 64: Auswahl
- 65: Programmschritt
- 66: Datensatz
- 67: Auswahlschritt

## Patentansprüche

1. Methode zur Optimierung von einstellbaren Parametern wenigstens einer Maschine, wobei die Optimierung der einstellbaren Parametern (51) durch Abarbeitung zumindest eines in einem Datenverarbeitungssystem (41, 49) hinterlegten Vorgehensalgorithmus (42a-c, 50) erfolgt, wobei
der abzuarbeitende Vorgehensalgorithmus (42 a-c, 50) aus einer Vielzahl von Vorgehensalgorithmen (42 a-c, 50) auswählbar ist und wobei die Auswahl in Abhängigkeit von in dem Datenverarbeitungssystem (41, 49) verarbeiteten maschineninternen Daten (48) und maschinenexternen Daten (44) und Zielwertdaten(47) erfolgt und die maschineninternen Daten (43) und die maschinenexternen Daten (44) und die Zielwertdaten (47) Situationsmuster (60) für die zugehörenden Vorgehensalgorithmen (42 a-c, 50) definieren, **dadurch gekennzeichnet dass** das Datenverarbeitungssystem (41, 49) zur Optimierung der einstellbaren Parameter (43) in Abhängigkeit von den ein momentanes Situationsmuster (60) definierenden maschineninternen Daten (43) und maschinenexternen Daten (44) sowie unter Berücksichtigung der Zielwertdaten (47) aus den hinterlegten Situationsmustern (60) ein dem momentanen Situationsmuster (60) nahekommendes oder identisches Situationsmuster (60) und den mit diesen Situationsmuster (60) verknüpften Vorgehensalgorithmus (42 a-c, 50) zur Abarbeitung auswählt.

2. Methode zur Optimlerung von einstellbaren Parametern nach Anspruch 1,
**dadurch gekennzeichnet,**
**dass** die Optimierung der einstellbaren Parameter (51) durch editierbare und/oder speicherbare Zielwertdaten (47) bestimmt wird.

3. Methode zur Optimierung von einstellbaren Parametern nach einem oder mehreren der vorhergehenden Ansprüche,
**dadurch gekennzeichnet,**
**dass** das Datenverarbeitungssystem (41) ein Diagnosesystem (49) Ist.

4. Methode zur Optimierung von einstellbaren Parametern nach einem oder mehreren der vorhergehenden Ansprüche,
**dadurch gekennzeichnet,**
**dass** das Datenverarbeitungssystem (41, 49) maschineninterne Daten (43) und maschinenexteme Daten (44) unter Berückslehtlgung von Zielwertdaten (47) verarbeltet und weiterverarbeitbare Ausgangsdaten (40, 48) generiert.

5. Methode zur Optimierung von einstellbaren Parametern nach Anspruch 5,
**dadurch gekennzeichnet,**
**dass** die maschinenintemen Daten (43), die maschinenexternen Daten (44) und die Ausgangsdaten (40, 48) durch das Datenverarbeltungssystem (41,49) editierbar und speicherbar sind.

6. Methode zur Optimierung von einstellbaren Parametern nach einem oder mehreren der vorhergehenden Ansprüche,
**dadurch gekennzeichnet,**
**dass** das Datenverarbeitungssystem (41, 49) zeitgesteuert arbeitet.

7. Methode zur Optimierung von einstellbaren Parametern nach einem oder mehreren der vorhergehenden Ansprüche,
**dadurch gekennzeichnet,**
**dass** die maschineninternen Daten (43) die zu optimierenden einstellbaren Parameter (51), weitere Parameter (52) und Internes Expertenwissen (53) sein können.

8. Methode zur Optimierung von einstellbaren Parametern nach Anspruch 7,
**dadurch gekennzeichnet,**
**dass** die zu optimierenden einstellbaren Parameter (51) die Fahrgeschwindigkeit, die Drehzahl zumindest einer Dreschtrommel (8) und/oder die Drehzahl des Gebläses (16) zumindest einer Reinigungseinrichtung (17) sind.

9. Methode zur Optimierung von einstellbaren Parametern nach Anspruch 7,
**dadurch gekennzeichnet,**
**dass** die weiteren Parameter (52) erntegutspezifische und/oder maschinenspezifische Parameter sind und deren Ermittlung Ober mit der Maschine (1, 2) In Wirkverbindung stehende Sensoren (24-27) oder durch Eingabe erfolgen kann.

10. Methode zur Optimierung von einstellbaren Parametern nach Anspruch 9,
**dadurch gekennzeichnet,**
**dass** die weiteren Parameter (52) der Komverlust (23), der Korndurchsatz (20), die Erntegutfeuchte, der Erntegutgesamtdurchsatz und/oder der Bruchkomanteil sein können.

11. Methode zur Optimierung von einstellbaren Parametern nach Anspruch 9,
**dadurch gekennzeichnet,**
**dass** die weiteren Parameter (52) Einstellberelche für die Parameter der Arbeitsorgans (7, 17, 19) sein können.

12. Methode zur Optimierung von einstellbaren Parametern nach einem oder mehreren der vorhergehenden Ansprüche,
**dadurch gekennzeichnet,**
**dass** die maschinenexternen Daten (44) durch exteme Systeme generiert werden und pflanzenspezifische Daten (54), geograpfische Daten (55), Wetterdaten (56) und/oder externes Expertenwissen (57) sein können.

13. Methode zur Optimierung von einstellbaren Parametern nach den Ansprüchen 7 und 12,
**dadurch gekennzeichnet,**
**dass** das interne Expertenwissen (53) und das ex- terne Expertenwissen (57) erntegut- und/oder ma- schinenbezogene Daten und Erfahrungswissen sind.

14. Methode zur Optimierung von elnstellberan Para- einstellbaren Parametern nach einem oder mehreren der vorhergehenden Ansprüche,
**dadurch gekennzeichnet,**
**dass** der zumindest eine Vorgehensalgorithmus (42a-c, 50) des Datenverarbeitungssystems (41, 49) Vorgehensdiagnosen und/oder Falldiagnosen und/oder modellorientierte Diagnosen abarbeiten kann.

15. Methode zur Optimierung von einstellbaren Parametern nach einem der vorhergenenden Anspruche
**dadurch gekennzeichnet,**
**dass** das Datenverarbeitungssystem (41,49) in Ab- hängigkeit von den maschineninternen Daten (43) und/oder maschinenexternen Daten (44) und/oder den Zietwertdaten (47) den Vorgahensalgorithmus (42a-c, 50) vorschlägt oder selbsttätig auswählt.

16. Methode zur Optimierung von einstellbaren Parametern nach einem oder mehreren der vorherge-henden Ansprüche,
**dadurch gekennzeichnet,**
**dass** das Datenverarbeitungssystem (41,19) in Abhänglgkeit von maschinenintem Daten (43) und maschinenexternen Daten (44) und unter Berücksichtigung veränderbarer Zielwertdaten (47) veränderte Vorgehensalgorithmen (50) generieren kann.

17. Methode zur Optimierung von metem nach einem oder mehreren der vorhergehenden Ansprüche,
**dadurch gekennzeichnet,**
**dass** das Datenverarbeltungssystem (41, 49) in Ab-hängigkelt von maschinenintern Daten (43) und maschinenexternen Daten (44) und unter Berücksichtigung veränderbarer Zielwertdaten (47) veränderte Situationsmuster (60, 62) generieren kann.

18. Methode zur Optimierung von einstellbaren Parametern nach einem oder mehreren der vorhergehenden Ansprüche,
**dadurch gekennzeichnet,**
**dass** die Vorgehensalgorithmen (50) und/oder Situationsmuster (60) in Datensätzen (66) abspeicherbar sind, die zumindest einen Teil der maschinenintemen Daten (43) und der maschinenexter-nen Daten (44) sowie derZielwertdaten (47)umfassen.

19. Methode zur Optimierung von einstellbaren Parametern nach einem oder mehreren der vorhergehenden Anspruche, **dadurch gekennzeichnet, dass** die Situationsmuster (60) und zugehörige Vorgehensalgorithmen (50) und/oder die optimierten einsteilbaren Parameter (51) für weitere Maschinen verfügbar in dem Datenverarbeitungssystem (41,49) hinterlegt sind.

20. Methode zur Optimierung von einstellbaren Parametern nach einem oder mehreren der vorhergehenden Ansprüche,
**dadurch gekennzeichnet,**
**dass** die Maschine eine landwirtschaftliche Erntemaschine (1,2) ist und der wenigstens eine Vorgehensalgorithmus (42a-c, 50) in Abhängigkeit von den Erntebedingungen der landwirtschaftlichen Erntemaschine (1, 2) bestimmt wird.

21. Methode zur Optimierung von einstellbaren Parametern nach einem oder mehreren der vorhergenenden Ansprüche;
**dadurch gekennzeichnet,**
**dass** die Vorgehensalgorithmen (42a-c, 50) durch Expertenbefragung anpassbar sind.

## Claims

1. A method of optimising adjustable parameters of at least one machine, wherein optimisation of the adjustable parameters (51) is effected by processing at least one procedural algorithm (42a-c, 50) stored in a data processing system (41, 49), wherein the procedural algorithm (42a-c, 50) to be processed can be selected from a plurality of procedural algorithms (42a-c, 50) and wherein the selection is effected in dependence on machine-internal data (43) and machine-external data (44) and target value data (47) which are processed in the data processing system (41, 49) and the machine-internal data (43) and the machine-external data (44) and the target value data (47) define situation patterns (60) for the associated procedural algorithms (42a-c, 50), **characterised in that** the data processing system (41, 49) for optimisation of the adjustable parameters (43), in dependence on the machine-internal data (43) and machine-external data (44) defining an instantaneous situation pattern (60) and having regard to the target value data (47), selects from the stored situation patterns (60) a situation pattern (60) which is close to or identical to the instantaneous situation pattern (60) and the procedural algorithm (42a-c, 50) linked to said situation pattern (60) for processing thereof.

2. A method of optimising adjustable parameters according to claim 1 **characterised in that** optimisation of the adjustable parameters is determined by editable and/or storable target value data (47).

3. A method of optimising adjustable parameters according to one or more of the preceding claims **characterised in that** the data processing system (41) is a diagnostic system (49).

4. A method of optimising adjustable parameters according to one or more of the preceding claims **characterised in that** the data processing system (41, 49) processes machine-internal data (43) and machine-external data (44) having regard to target value data (47) and generates output data (40, 48) which can be further processed.

5. A method of optimising adjustable parameters according to claim 5 **characterised in that** the machine-internal data (43), the machine-external data (44) and the output data (40, 48) can be edited and stored by the data processing system (41, 49).

6. A method of optimising adjustable parameters according to one or more of the preceding claims **characterised in that** the data processing system (41, 49) operates in time-controlled fashion.

7. A method of optimising adjustable parameters according to one or more of the preceding claims **characterised in that** the machine-internal data (43) can be the adjustable parameters (51) to be optimised, further parameters (52) and internal expert knowledge (53).

8. A method of optimising adjustable parameters according to claim 7 **characterised in that** the adjustable parameters (51) to be optimised are the speed of travel, the rotary speed of at least one threshing drum (8) and/or the rotary speed of the blower (16) of at least one cleaning device (17).

9. A method of optimising adjustable parameters according to claim 7 **characterised in that** the further parameters (52) are crop material-specific and/or machine-specific parameters and they can be ascertained by way of sensors (24-27) operatively connected to the machine (1, 2) or by input.

10. A method of optimising adjustable parameters according to claim 9 **characterised in that** the further parameters (52) can be the grain loss (23), the grain through-put (20), the crop material moisture content, the total crop material through-put and/or the broken grain fraction.

11. A method of optimising adjustable parameters according to claim 9 **characterised in that** the further parameters (52) can be adjustment ranges for the parameters of the working members (7, 17, 19).

12. A method of optimising adjustable parameters according to one or more of the preceding claims **characterised in that** the machine-external data (44) are generated by external systems and can be plant-specific data (54), geographical data (55), weather data (56) and/or external expert knowledge (57).

13. A method of optimising adjustable parameters according to claims 7 and 12 **characterised in that** the internal expert knowledge (53) and the external expert knowledge (57) are crop material-related and/or machine-related data and experience.

14. A method of optimising adjustable parameters according to one or more of the preceding claims **characterised in that** the at least one procedural algorithm (42a-c, 50) of the data processing system (41, 49) can implement procedural diagnoses and/or case diagnoses and/or model-oriented diagnoses.

15. A method of optimising adjustable parameters according to one of the preceding claims **characterised in that** the data processing system (41-49) proposes or automatically selects the procedural algorithm (42a-c, 50) in dependence on the machine-internal data (43) and/or machine-external data (44) and/or the target value data (47).

16. A method of optimising adjustable parameters according to one or more of the preceding claims **characterised in that** the data processing system (41, 49) can generate altered procedural algorithms (50) in dependence on machine-internal data (43) and machine-external data (44) and having regard to variable target value data (47).

17. A method of optimising adjustable parameters according to one or more of the preceding claims **characterised in that** the data processing system (41, 49) can generate altered situation patterns (60, 62) in dependence on machine-internal data (43) and machine-external data (44) and having regard to variable target value data (47).

18. A method of optimising adjustable parameters according to one or more of the preceding claims **characterised in that** the procedural algorithms (50) and/or situation patterns (80) can be stored in data sets (66) which include at least a part of the machine-internal data (43) and the machine-external data (44) as well as the target value data (47).

19. A method of optimising adjustable parameters according to one or more of the preceding claims **characterised in that** the situation patterns (60) and associated procedural algorithms (50) and/or the optimised adjustable parameters (51) are stored in the data processing system (41, 49) in such a way as to be available for further machines.

20. A method of optimising adjustable parameters according to one or more of the preceding claims **characterised in that** the machine is an agricultural harvester (1, 2) and the at least one procedural algorithm (42a-c, 50) is determined in dependence on the harvesting conditions of the agricultural harvester (1, 2).

21. A method of optimising adjustable parameters according to one or more of the preceding claims **characterised in that** the procedural algorithms (42a-c, 50) can be adapted by expert enquiry.

## Revendications

1. Méthode d'optimisation de paramètres réglables d'au moins une machine, l'optimisation des paramètres réglables (51) s'effectuant par exécution d'au moins un algorithme de processus (42a-c, 50) enregistré dans un système de traitement de données (41, 49), l'algorithme de processus (42a-c, 50) à exécuter pouvant être choisi parmi une pluralité d'algorithmes de processus (42a-c, 50), et le choix s'effectuant en fonction de données (48) internes à la machine, de données (44) externes à la machine et de données de valeurs cibles (47), lesdites données étant toutes traitées dans le système de traitement de données (41, 49), et les données (43) internes à la machine et les données (44) externes à la machine et les données de valeurs cibles (47) définissant des modèles situationnels (60) pour les algorithmes de processus associés (42a-c, 50), **caractérisée en ce que**, pour optimiser les paramètres réglables (43), le système de traitement de données (41, 49) choisit parmi les modèles situationnels enregistrés (60), en fonction des données (43) internes à la machine et des données (44) externes à la machine définissant un modèle situationnel instantané (60) ainsi qu'en tenant compte des données de valeurs cibles (47), un modèle situationnel (60) proche du modèle situationnel instantané (60), ou identique à celui-ci, ainsi que l'algorithme de processus (42a-c, 50) lié à ce modèle situationnel (60).

2. Méthode d'optimisation de paramètres réglables selon la revendication 1, **caractérisée en ce que** l'optimisation des paramètres réglables (51) est déterminée par des données de valeurs cibles (47) éditables et/ou mémorisables.

3. Méthode d'optimisation de paramètres réglables selon une ou plusieurs des revendications précédentes, **caractérisée en ce que** le système de traitement de données (41) est un système de diagnostic (49).

4. Méthode d'optimisation de paramètres réglables selon une ou plusieurs des revendications précédentes, **caractérisée en ce que** le système de traitement de données (41, 49) traite des données (43) internes à la machine et des données (44) externes à la machine en tenant compte de données de valeurs cibles (47) et génère des données de sortie retraitables (40, 48).

5. Méthode d'optimisation de paramètres réglables selon la revendication 5, **caractérisée en ce que** les données (43) internes à la machine, les données (44) externes à la machine et les données de sortie (40, 48) sont éditables et mémorisables par l'intermédiaire du système de traitement de données (41, 49).

6. Méthode d'optimisation de paramètres réglables selon une ou plusieurs des revendications précédentes, **caractérisée en ce que** le système de traitement de données (41, 49) est temporisé.

7. Méthode d'optimisation de paramètres réglables selon une ou plusieurs des revendications précédentes, **caractérisée en ce que** les données (43) internes à la machine peuvent être les paramètres réglables (51) à optimiser, des paramètres supplémentaires (52) et une expertise interne (53).

8. Méthode d'optimisation de paramètres réglables selon la revendication 7, **caractérisée en ce que** les paramètres réglables (51) à optimiser sont la vitesse de marche, la vitesse de rotation d'au moins un batteur (8) et/ou la vitesse de rotation du ventilateur (16) d'au moins d'un dispositif de nettoyage (17).

9. Méthode d'optimisation de paramètres réglables selon la revendication 7, **caractérisée en ce que** les paramètres supplémentaires (52) sont spécifiques au produit récolté et/ou sont des paramètres spécifiques à la machine et peuvent être recueillis par l'intermédiaire de capteurs (24-27) en liaison active avec la machine (1, 2).

10. Méthode d'optimisation de paramètres réglables selon la revendication 9, **caractérisée en ce que** les paramètres supplémentaires (52) peuvent être la perte de grain (23), le débit de grain (20), l'humidité du produit récolté, le débit total de produit récolté et/ou la proportion de grain cassé.

11. Méthode d'optimisation de paramètres réglables selon la revendication 9, **caractérisée en ce que** les paramètres supplémentaires (52) peuvent être des plages de réglage pour les paramètres des organes de travail (7, 17, 19).

12. Méthode d'optimisation de paramètres réglables selon une ou plusieurs des revendications précédentes, **caractérisée en ce que** les données (44) externes à la machine sont générées par des systèmes externes et peuvent être des données (54) spécifiques aux plantes, des données géographiques (55), des données météorologiques (56) et/ou une expertise externe (57).

13. Méthode d'optimisation de paramètres réglables selon les revendications 7 et 12, **caractérisée en ce que** l'expertise interne (53) et l'expertise externe (57) sont des données et des connaissances empiriques liées au produit récolté et/ou à la machine.

14. Méthode d'optimisation de paramètres réglables selon une ou plusieurs des revendications précédentes, **caractérisée en ce que** le au moins un algorithme de processus (42a-c, 50) du système de traitement de données (41, 49) peut prendre en charge des diagnostics de processus et/ou des diagnostics de cas et/ou des diagnostics basés sur des modèles.

15. Méthode d'optimisation de paramètres réglables selon une des revendications précédentes, **caractérisée en ce que** le système de traitement de données (41, 49) propose l'algorithme de processus (42a-c, 50) ou le sélectionne automatiquement en fonction des données (43) internes à la machine et/ou des données (44) externes à la machine et/ou des données de valeurs cibles (47).

16. Méthode d'optimisation de paramètres réglables selon une ou plusieurs des revendications précédentes, **caractérisée en ce que**, en fonction de données (43) internes à la machine et de données (44) externes à la machine et en tenant compte de données de valeurs cibles variables (47), le système de traitement de données (41, 49) peut générer des algorithmes de processus modifiés (50).

17. Méthode d'optimisation de paramètres réglables selon une ou plusieurs des revendications précédentes, **caractérisée en ce que**, en fonction de données (43) internes à la machine et de données (44) externes à la machine et en tenant compte de données de valeurs cibles variables (47), le système de traitement de données (41, 49) peut générer des modèles situationnels modifiés (60, 62).

18. Méthode d'optimisation de paramètres réglables selon une ou plusieurs des revendications précédentes, **caractérisée en ce que** les algorithmes de processus (50) et/ou les modèles situationnels (60) sont mémorisables sous forme d'ensembles de données (66) qui englobent au moins une partie des données (43) internes à la machine et des données (44) externes à la machine ainsi que des données de valeurs cibles (47).

19. Méthode d'optimisation de paramètres réglables selon une ou plusieurs des revendications précédentes, **caractérisée en ce que** les modèles situationnels (60) et les algorithmes de processus associés (50) et/ou les paramètres réglables optimisés (51) sont enregistrés dans le système de traitement de données (41, 49) pour être accessibles à d'autres machines.

20. Méthode d'optimisation de paramètres réglables selon une ou plusieurs des revendications précédentes, **caractérisée en ce que** la machine est une machine agricole de récolte (1, 2), et le au moins un algorithme de processus (42a-c, 50) est déterminé en fonction des conditions de récolte de la machine agricole de récolte (1, 2).

21. Méthode d'optimisation de paramètres réglables selon une ou plusieurs des revendications précédentes, **caractérisée en ce que** les algorithmes de processus (42a-c, 50) sont adaptables par l'intermédiaire de consultations d'experts.
